# EUROPEAN PATENT APPLICATION

(11) **EP 2 731 063 A2**
(43) Date of publication of application: **14.05.2014**
(21) Application number: 13003209.7
(22) Date of filing: 24.06.2013
(51) Int. Cl.: G06Q 10/06, G06Q 10/10

(54) **System and method of implementing a transformative user experience**

(30) Priority: 26.06.2012 US 201261664624 P; 10.01.2013 US 201313738263
(71) Applicant: SAP AG, 69190 Walldorf (DE)
(72) Inventor: Beringer, Joerg, 69190 Walldorf (DE); Latzina, Markus, 69190 Walldorf (DE)
(74) Representative: Müller-Boré & Partner Patentanwälte PartG mbB

(57) **Abstract**

A system and method of implementing a user experience. The method includes adjusting an elastic property of a container to change its context. The elastic property is one of an elastic purpose, and elastic collaboration, and an elastic practice. A revised view of a task object is presented according to the elastic property of the container having been adjusted and the context having been changed.

## Description

### CROSS REFERENCE TO RELATED APPLICATIONS

The present application claims priority to U.S. Provisional App. No. 61/664,624 for "Principles of Transformative User Experience" filed June 26, 2012, which is incorporated herein by reference.

### BACKGROUND

Technical Field

The present disclosure relates to data processing, and in particular, to the design and operation of the user experience.

Description of the Related Art

Unless otherwise indicated herein, the approaches described in this section are not prior art to the claims in this application and are not admitted to be prior art by inclusion in this section.

Traditionally, software applications are built around a fixed set of use cases and workflows to align with needs of end users. As a result, the shipped product experience is typically confined by this initial engineering scope and results in hard boundaries between applications.

The concept of Meta Design stresses the importance of designs products which offer spaces of interaction potential rather than shipping applications packaged around a fixed number of use cases. Meta Design describes the need for open systems that accommodate significant end user driven modifications of a product to serve -- even unforeseen, or, unplanned for -- task-centric user needs. This requires a design approach that surpasses the enablement of specific use cases and avoids rigid application boundaries in form of packaged applications, but rather creates user interfaces that allow seamless transitions between different task states at use time. To achieve this flexibility, underspecification of the user interface is propagated to allow users to impose different meanings and usages on an IT-artifact. With an underspecified product, the appropriation is still intended to take place outside of the system, limiting the designer to retrospectively observe this phenomenon instead of being able to design for it.

### SUMMARY

Given the above background, the above-described paradigm of packaged applications is not applicable to create open-ended, fluid user experiences in which the information system forms a symbiosis with the user by offering opportunities for action and adapting to situational needs. Meta Design concepts are an attempt to address these concerns but fall short. Thus, there is a need for a transformative user experience.

Transformative User Experience (TUX) describes a system that implements a new rationale for designing and implementing engineering interactive systems that bridge the omnipresent chasm between content-agnostic operating systems on the one hand, and packaged applications on the other. The TUX paradigm transcends the notion of end user applications by introducing a radically different system architecture for interactive software which encompasses elastic context and elastic content items as the two core primitives which both can be defined at design time and runtime. While developers enable content and may prepare re-usable functional context, the end user is also empowered to compose content and context at runtime in an ostensive manner to stay in tune with situational needs.

One embodiment is a computer-implemented method of implementing a user experience. The method includes generating, by a computer system, a container that is configured to present one or more task objects. The method further includes receiving a task object to present within the container. The method further includes presenting, by the computer system, a view of the task object within the container based on a context of the container and rendering information retrieved by the container via a rendering service of the task object. The rendering information defines at least in part how the task object is to be presented within a particular context of the container amongst a plurality of contexts within which the task object can be rendered. The method further includes adjusting an elastic property of the container to change the context of the container. The elastic property is one of an elastic purpose, and elastic collaboration, and an elastic practice. The method further includes presenting a revised view of the task object according to the elastic property of the container having been adjusted and the context having been changed.

According to an embodiment, adjusting the elastic property of the container transitions the container from an unspecific purpose to a specific purpose.

According to an embodiment, the elastic purpose is implemented by adding a tool to the container. The tool may be an org-chart tool.

According to an embodiment, the elastic collaboration adjusts the context of the container from a personal context to a shared context. This adjustment may occur at runtime, and may occur without re-instantiating the context.

According to an embodiment, the elastic practice may be implemented by adding a task flow segment to the container. The task flow segment may include a task flow. The task flow segment may be configured to accept an input from the container, to process the input according to the task flow, and to generate an output to the container according to the input having been processed according to the task flow. The output may adjust the context of the container.

According to an embodiment, the task object has a behavior, and the method further includes adjusting the behavior of the task object to a revised behavior, according to the elastic property of the container having been adjusted and the context having been changed.

According to an embodiment, the method further includes storing a system object, where the task object is a proxy to the system object.

According to an embodiment, the context imposes a situational semantic on a system object by casting the system object as the task object.

According to an embodiment, the context is a pre-defined context and acts as a purposed tool with a pre-defined task meaning.

According to an embodiment, the method further includes converting the context into a second task object within a second context.

Another embodiment is a computer-implemented method of implementing a user experience. The method includes generating, by a computer system, a container that is configured to present one or more task objects. The method further includes receiving a task object to present within the container. The method further includes freezing the data of the object as a snapshot. The method further includes presenting, by the computer system, a view of the task object within the container based on a context of the container and rendering information retrieved by the container via a rendering service of the task object. The rendering information defines at least in part how the task object is to be presented within a particular context of the container amongst a plurality of contexts within which the task object can be rendered. The view corresponds to the snapshot of the task object with the data having been frozen.

A computer system may operate to implement the methods described above. The computer system may store, execute or be otherwise controlled by one or more computer programs that control the computer system to implement the methods described above.

A non-transitory computer readable medium may store instructions to control a computer system to perform the methods described above. The instructions may include a generating component, a receiving component, a presenting component, and an adjusting component.

The following detailed description and accompanying drawings provide a better understanding of the nature and advantages of the present disclosure.

### BRIEF DESCRIPTION OF THE DRAWINGS

FIG. 1 is diagram that illustrates how contextual appropriation is realized by allowing containers to adjust task objects to reflect the local semantics of use.

FIG. 2 is a diagram that illustrates the features of elastic task objects, contextual usage and elastic context.

FIG. 3 is a flowchart that details the snapshotting process.

FIG. 4 is a flowchart that details the process relating to the elasticity of containers.

FIG. 5 is a block diagram of an example computer system and network for implementing embodiments of the present disclosure.

### DETAILED DESCRIPTION

Described herein are techniques for implementing a user experience. In the following description, for purposes of explanation, numerous examples and specific details are set forth in order to provide a thorough understanding of the present disclosure. It will be evident, however, to one skilled in the art that the present disclosure as defined by the claims may include some or all of the features in these examples alone or in combination with other features described below, and may further include modifications and equivalents of the features and concepts described herein.

In this document, various methods, processes and procedures are detailed. Although particular steps may be described in a certain sequence, such sequence is mainly for convenience and clarity. A particular step may be repeated more than once, may occur before or after other steps (even if those steps are otherwise described in another sequence), and may occur in parallel with other steps. A second step is required to follow a first step only when the first step must be completed before the second step is begun. Such a situation will be specifically pointed out when not clear from the context. A particular step may be omitted; a particular step is required only when its omission would materially impact another step.

In this document, the terms "and", "or" and "and/or" are used. Such terms are to be read as having the same meaning; that is, inclusively. For example, "A and B" may mean at least the following: "both A and B", "only A", "only B", "at least both A and B". As another example, "A or B" may mean at least the following: "only A", "only B", "both A and B", "at least both A and B". When an exclusive-or is intended, such will be specifically noted (e.g., "either A or B", "at most one of A and B").

In this document, various computer-implemented methods, processes and procedures are described. It is to be understood that the various actions (receiving, storing, sending, communicating, displaying, etc.) are performed by a hardware device, even if the action may be authorized, initiated or triggered by a user, or even if the hardware device is controlled by a computer program, software, firmware, etc. Further, it is to be understood that the hardware device is operating on data, even if the data may represent concepts or real-world objects, thus the explicit labeling as "data" as such is omitted. For example, when the hardware device is described as "storing a record", it is to be understood that the hardware device is storing data that represents the record.

In this document, the terms "design time" and "run time" are used. In general, design time refers to the period of time for development of a service, program or application prior to compilation; run time refers to the period of time for execution of the service, program or application after design time.

Design time and run time classifications may also be applied to the autonomy of a service, program or application. Design-time autonomy refers to the independence with which the services could be evolved without impacting their service consumers (e.g., users). This type of autonomy is required as the service's underlying legacy resources might need an overhaul or the service's logic might need refactoring in order to make it more efficient. The application of the service loose coupling and the service abstraction principles helps in attaining design-time autonomy as their application results in services whose contracts are shielded from their logic and implementation and hence, the services could be redesigned without affecting their service consumers. On the other hand, run-time autonomy refers to the extent of the control that a service has over the way its solution logic is processed by the run-time environment. The more control a service has over its run-time environment, the more predictable is its behavior. Run-time autonomy is achieved by providing dedicated processing resources to the service. For example, if the service logic performs memory intensive tasks then the service could be deployed to a server with reserved or conserved resources. Similarly, by providing locally cached copies of data, where applicable, the service's dependency on a remote shared database can be reduced. As a result the overall autonomy of the service is increased.

The present application builds upon some of the features discussed in the co-pending U.S. Patent App. No. 13/267,668 for "Transformative User Interfaces" filed October 6, 2011, which is incorporated herein by reference.

Given current trends in the IT software industry, the conventional paradigm of designing and building applications -- as it has been for the past 50 years -- is facing a number of challenges. As compared to traditional application design which largely follows a "packaged design" rationale, the pull for more flexible applications arises from the increasing pervasiveness of information systems and the resulting need for situational adaptability of functionality and content. To optimize the embed-ability of a system, a design goal is to optimize the ability for adoption and elasticity of an IT-artifact at use time.

The Transformative User Experience (TUX) brings forward the concept of Meta Design by introducing novel system behavior to build systems that intrinsically establish both a user-managed composition environment and the modeling of elastic contexts at runtime. TUX conceives of task contexts in terms of spaces of interaction potentials where users can realize their current goals by moving across various task contexts and along self-determined transformative vectors.

The description of TUX contained below presents and exemplifies a number of principles how to design for this new breed of applications that enable user experiences with generative character, i.e., where users can use and interact with information according to their newly arising needs. This high degree of runtime flexibility will help to unfold the technical possibilities as they are increasingly becoming available in the shape of cloud and mobile technologies, respectively. As content and functions are not exclusively owned by a single application anymore, but rather can be consumed on virtually any device and application, the design of information systems that organically adapt to situational needs will soon become rather the standard than the exception.

Today, applications are often the spear-head of a web service striving for user adoption through simple and narrow design. Rather than reflecting a task context and enabling users to accomplish one coherent task, such applications focus on single user intents and -- as a consequence -- force users to jump between several small "apps" to compose services and information as needed. Larger applications that are designed to support a wider spectrum of tasks may offer more flexible workflows, but are still limited to one specific task domain. This packaged application design should be augmented by an approach where user interfaces emerge at runtime in the very interplay between user intents and the actual information -- in other terms, ostensively. The actual task context will often exceed one individual application and will enable content to be transformed across applications and consumed on multiple devices. The ability to adapt contexts in ways that match situational task conditions results in a new quality of TUX in which the system inherently follows users' task flow. TUX implements aspects of appropriation and Meta Design by acknowledging the existence of control and expertise outside of the system. This trend of transformative user interfaces requires new standards for interchangeable content, as well as the modeling of task contexts, since both will no longer come as fixed ingredients of traditionally designed applications.

1. Foundations of Transformative User Experience

The following paragraphs describe a foundational framework for a novel system architecture which intrinsically enables transformative user experience. For this purpose, key principles are stated regarding how to achieve situational contextualization of content at runtime in order to support task life cycles in a much more fluid way as compared to conventional approaches. The principles are based on two basic concepts:

• A *technical container* which is hosting and displaying task objects, e.g.: a plain canvas (window), a device, a functional component (tool, application), or a collaboration space.

• A *task object* which acts as a proxy to a *system object* and provides functionality for the hosting container to contextualize its *appearance* (also referred to as its *view*) and *behavior* to match the local semantics of the container.

In general, the *view* refers to the appearance of the task object to users, and serves as a signal to what *behaviors* the task object may exhibit. The *behavior* then refers to the response of the task object to input or stimuli, for example from user manipulation or from the interaction with other task objects or with the container.

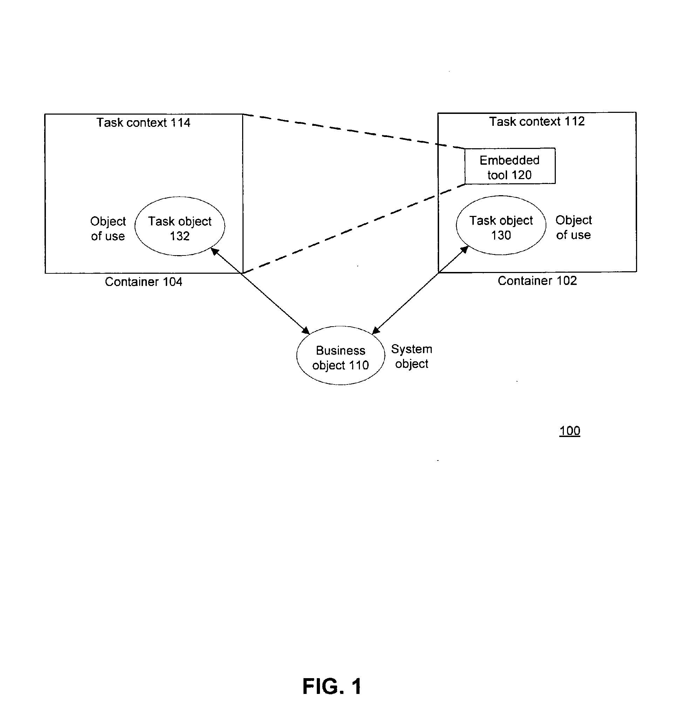

FIG. 1 is a diagram 100 that illustrates how contextual appropriation is realized by allowing containers to adjust task objects to reflect the local semantics of use. FIG. 1 shows that the diagram 100 includes a container 102, a container 104, and a system object 110. In a three-tier system architecture that includes a presentation tier, an application tier and a database tier implemented as separate computing devices connected via a network, a computer in the presentation tier may implement a user interface that displays the containers 102 and 104 as directed by a computer that implements the application related to the user interface (e.g., a supply chain application, an invoicing application, etc.); the system object 110 may be stored by a computer in the database tier. The container 102 implements a task context 112 and the container 104 implements a task context 114.

The container 104 may be implemented within the container 102, e.g., via the embedded tool 120. Further details on the embedded tool 120 (and other ways to implement containers within other containers) are provided below.

The system object 110 may be a business object. When the system object 110 is placed in a container, it becomes a task object. For example, when the system object 110 is placed in the container 102, it becomes the task object 130; when the system object 110 is placed in the container 104, it becomes the task object 132. The views and the behaviors of the task object 130 as compared to those of the task object 132 may differ according to the differences between the task context 112 and the task context 114.

The difference between system object and task object (aka object of use) is as follows. For example, a generic document is a system object, potentially owned by a text processing application, but the use of a document in an actual context might be meeting minutes, patent application, contract, etc. The need for appropriation may be seen primarily by moving objects along a task context which may fluidly change and evolve at runtime. One goal of the TUX system is to implement a system design that is elastic and adapts to task contexts, rather than building IT-artifacts with packaged design and leaving task appropriation unmanaged and rather in conflict with the system design.

With TUX, the appropriation takes place in the system by contextualizing system objects to a situational semantics or task context which is represented by a technical container. This contextualization can affect an object in two ways:

• A task object can adjust its *posture.*

• A task object can be *abstracted* or *casted* to change its *behavior.*

With these mechanisms in place, the TUX system can adapt system objects (e.g., 110) to become task objects (e.g., 130) that reflect the meaning of an object in relation to the specific container context. Since this container-mediated appropriation is handled in the system, it takes place within the system rather than users imposing a new usage to an IT-artifact from the outside. By making this an explicit design principle, TUX includes it into the design consideration rather than leaving it unspecified:

. • A *container* models *context* that is used to impose situational semantics on *system objects* by casting them into local *task objects* with local *appearance* and *behavior.*

Note that this is different from traditional drag-and-drop scenarios where objects are moved between containers, but do not change their semantic. Direct Manipulation established principles of moving objects with simple mouse gestures, but did not elaborate on the interaction of context and object. It is also different from an OLE or a mesh-up environment which deals with embedding a system object as is within a host container. TUX is all about the situational adaptation of an object as mediated by the technical container which represents certain task semantics.

Imagine a large display (the container) which is empty and as such is contextually unspecific (e.g., the container 102). A group of people begins to pull up names of individual managers who should play a major role in a new business (e.g., the task object 130 and other task objects). At this point, the large display is just a collection of task objects (people). Now, one user is adding a tool (e.g., the embedded tool 130) which provides functionality to build an organizational chart. This tool implements a specialized container (e.g., the container 104) that is designed to display cost center hierarchies for the purpose of building organizational structures.

• A *container* may come with a-priori defined *context* and act as a purposed *tool* that has a pre-defined task meaning.

Because of this additional container being added to the large display as an org chart planning tool (e.g., the embedded tool 120), the entire display now turns into a planning environment and the context becomes that of an organizational structure with managers being the candidates for cost centers (e.g., the context 114 and the container 104). This incremental specification of a purpose or task context may be captured as another TUX principle:

• A *context* can change its semantics at *runtime,* typically becoming more specific by embedding purposed *containers* or by binding concrete *content* to the *context.*

Further in the exercise, several users start to create different variants of the org chart which triggers a discussion about pro and cons of the different org structures. The managers' names are still task objects (e.g., the task object 132 and other task objects in the container 104), and the org chart itself, but now each org chart proposal becomes a decision option (task object) within in a decision making context. This transition of a task container (the org chart) to a task object (decision option) can be captured as another principle:

• A *context* can become a *task object* within another context depending on *focus.*

In the absence of TUX, there is no formal way to describe the principles of designing for such an organic, open-ended interaction. TUX enables system designers not only to formulate guiding design principles, but also to derive technical requirements to enable such transformative interfaces natively within the system. The ability of task objects being moved around across contexts and the ability of adjusting the form and behavior of system objects to reflect the context-dependent semantics of task object of use opens up new ways of building generative runtimes. End users can transform the design space simply by instantiating contexts and by moving content across contexts. In the example above, the users transformed the large display into an org chart discussion and a decision making context. They did this by adding and moving managers as content items around, and by adding an org chart builder as an additional tool context.

The new approach of TUX combines cognitive theories of action planning and task accomplishment with semantic approaches that introduce semantic frames to express situational semantic. The TUX approach endeavors to mimic exactly the same interaction with the technical container being the frame and the task object being the local object of use.

The approach covers intrinsically many user experience qualities by allowing contexts to be underspecified (open for interpretation), by supporting aspects of direct manipulation with respect to task objects (provide visibility and immediate effect of action), and by empowering the user not only to interact with a set of predefined applications, but to define the purpose of a context incrementally (support - not control, expose intensions).

TUX adds one important principle, which is the elasticity of the system itself. The usage of the large display is an example of such an elastic technical container which underwent a transition from being an empty container to being an org chart planning environment. As discussed below, most goal-oriented user work flows are subject to such transitions.

2. Elasticity as a Core Quality of Transformative User Experience

The previous section focused on describing how to move task objects between containers to reflect changing object semantics due to situational contexts and letting contexts evolve at runtime to reflect situational task semantic. The present section describes how these principles can be used to realize elastic user interfaces.

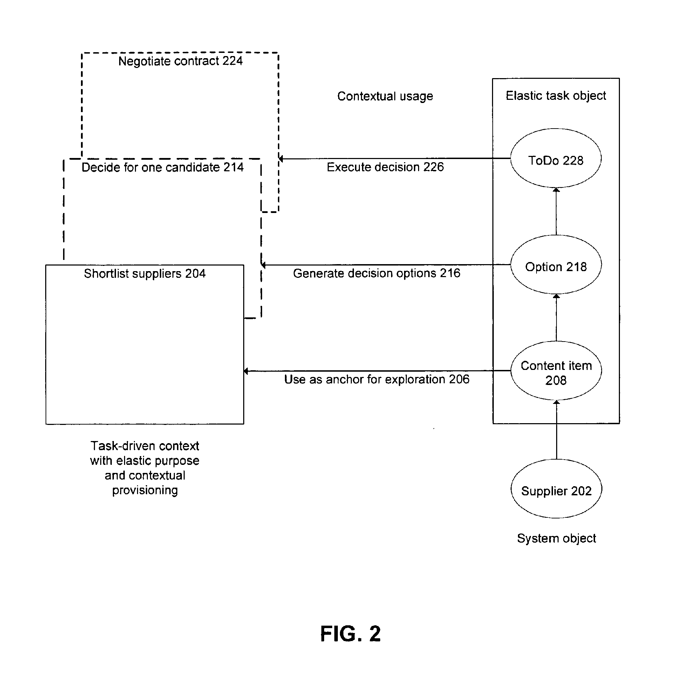

Elasticity is an important characteristic of an IT-artifact if one wants the artifact to be able to adapt to its social environment and form a socio-technical symbiosis. Software applications often lack elasticity because they are designed for specific tasks thus failing to adjust to new contexts. But in reality, task contexts are often not mechanistic but grow organically as needed in a given situation. Therefore, there is a need for designing IT-artifacts that are to some extent elastic with respect to their meaning and user interface. Let us illustrate this new quality with an example from the Enterprise Resource Planning (ERP) domain (with reference to FIG. 2), in which the gap between packaged application design and situational appropriation of system functionality becomes noticeable:

Let us assume that a business user is searching for suppliers who are qualified to satisfy a specific demand. The suppliers are stored as system objects (e.g., the supplier 202 is stored as a business object by the ERP system). When searching for suppliers who fulfill those criteria, suppliers will be listed as result items within a result list (e.g., the elastic context 204 for shortlist suppliers). In TUX terms, the supplier 202 is the system object and the search/match list 204 is a task-specific container with result items being the task objects, signified by the line 206 labeled "use as anchor for exploration" between the content item 208 (an elastic task object corresponding to the supplier system object 202) and the shortlist suppliers context 204. In this context, the user expects the result items to display information sufficient to inspect, refine, and select them as a potential match; this is signified by the label "generate decision options" on the line 216 between the option object 218 (an elastic task object corresponding to the supplier 202 system object) and the "decide for one candidate" context 214. The content 218 is still a supplier object (e.g., corresponding to the supplier 202), but users would expect system abilities to compare, inspect, and collect each item. This functionality is motivated by the task context "search and collect potential candidates" for the "decide for one candidate" context 214. When selecting several suppliers as prospects, the result items become members of a shortlist of candidates. Those members now inherit the behaviors of decision options which need to be evaluated and prioritized. The context 214 is a new container representing the activity of "short listing" which should reflect the current preferences and ranking. The fact that each item is a supplier is now less prominent, but users rather annotate and vote each item for facilitating the decision making. For the most promising candidates, in depth due diligence might be planed, by moving the top suppliers into a ToDo list; this is signified by the label "execute decision" on the line 226 between the todo object 228 (an elastic task object corresponding to the supplier 202 system object) and the "negotiate contract" context 224. Each supplier (e.g., the supplier 202) now becomes an action item (e.g., the task object 228) within the ToDo list (e.g., the container 224). After final decision have been made, the decision has to be signed off by a stakeholder, in which case the preferred supplier may be forwarded by email as a decision item which requires formal approval and agreement. This approval functionality is not represented by the ERP business object "supplier", but by the framing task context.

During this scenario, it is only of peripheral interest that the supplier is originally an ERP object (e.g., the supplier 202 system object). The supplier is rather used as an anchor for searching (e.g., the contextual usage line 206), as a decision option for picking the right accounts (e.g., the contextual usage line 216), and as an action item for the strategic purchaser (e.g., the contextual usage line 226). As FIG. 2 illustrates, the system object supplier 202 actually is transformed into different objects of use (e.g., 208, 218 and 228) depending on the task context.

With TUX, the user is able to move the supplier (e.g., 202) from one task context to the next (e.g., from 204 to 214 to 224), with the system being always aware of the identity of a supplier instance and the ability to contextually support the local meaning of the supplier (e.g., 208 and 218 and 228) within a given task setting. The context itself changed from being an unspecific empty workspace to an anchored exploration task (e.g., 204), a decision making task (e.g., 214), and a work assignment task environment 224 (e.g., 224). Those transitions between contexts are not rigid, pre-designed workflows between discrete packaged services, but evolve naturally by activating methods and services and moving the suppliers as task objects from one to the other.

With this transformative framework in place, containers can cast system objects to local semantics without losing the system identity, and choose between several appearances supported by the objects. The following sections list in more detail the examples of supporting this transformative behavior of objects and containers.

2.1 Elasticity of Task Objects

TUX decouples the identity of an object from its usage within a given task context. A context can influence the posture of an object and add specific behaviors to it to create task objects which are tailored to this particular task context. In contrast to system or UI objects, the term "task objects" is used to emphasize that in the course of user interaction they can gain various meanings which are reflective of the current user goals and the particular task context in which they are embedded. Task objects are indicative of the principle of contextual polymorphism since they can adapt semantically in various ways to their respective context. Practically, referring to the example described above with reference to FIG. 2, the supplier as a system object is casted to a task object by inheriting semantics which are specific to the particular task context in which this object is used in. The binding of the task object to the actual system object - in this case the supplier within the ERP system - is always preserved; it can be used to navigate to services specific to the system object.

The creation of task objects requires different mechanisms of adapting objects to containers.

2.1.1 Contextual Casting

A system object can be casted to another class which models the behavior of a task object instead of the original system object. The new semantics is specific and local to the container which represents the task context. In order to enable casting and hosting of system objects, the TUX framework supports abstraction of system objects, e.g., by providing a generic task object class that provides a handle to its identity and some generic interfaces to access common behaviors.

2.1.2 Contextual Postures

TUX also implements a solution for how to render the object by default because often the task container cannot retrieve suitable information as to the object properties in detail. TUX adjusts the appearance (phenotype) of an object despite the fact that the hosting context does not know the object type. This is achieved by provisioning the abstract task object with a set of contextual postures (appearances) the hosting container can choose from when rendering an object. Within the TUX framework there exists a number of standard postures which can be requested by the context and have to be provided by the object. Examples for such archetypical postures at the object level are data point, list item, table row, business card, or fact sheet. While the hosting container is responsible for the actual rendering, the object is sending the information in form of name-value pairs. For example, when the purchaser (a user) drags a supplier (an object) from a search container into a shortlist tool, the posture of the supplier might change from being a list item to being displayed as a business card. When the purchaser lays out the suppliers on a map, the posture might be reduced to being a data point.

One way that the TUX system implements the rendering is with a rendering service. The rendering service is associated with each object to be displayed. The rendering service operates on rendering information associated with the object. The rendering information may be in the form of name-value pairs that define the available postures (data point, list item, etc.). The rendering service then renders the object within the container based on the context of the container and the rendering information.

Note that this approach is extending the concept of "postures of application" to "postures of objects". As Alan Cooper pointed out, a good designer chooses always a "proper" posture for an application depending on its importance, richness, and usage mode. Similarly, the TUX system implements a limited number of postures for objects. This contextualization of system objects corresponds to the concept of late binding, where task objects are added at runtime to the container, and the container can adapt them and manipulate them by inspecting the task object. Of course, there are limitations. As soon as the user needs all details, only the original parent application can provide a domain-specific object inspector.

As discussed above, the present application builds upon some of the features discussed in the co-pending U.S. Patent App. No. 13/267,668 for "Transformative User Interfaces" filed October 6, 2011. The following sections provide more details for a number of these extended features.

2.1.3 Contextual Volatility

Volatility refers to the concept of snapshotting vs. live view of an object. While the binding of the task object to the actual system object is always given, it is sometimes more appropriate to freeze the object at the time it is added to the container and thus turn it into an artifact instead of live data.

This difference can be quite important if task objects are expected to be tangible artifacts local to a context instead of being references to external living things. Imagine a purchaser adding an analytical chart to the shortlist for making an argument about the low performance of a supplier. This chart must not change over time but rather reflect the observation that was used when adding the supplier to the context as evidence for this insight.

Frozen task objects still point to their parent application, so that users can open a snapshot for editing or for deriving new versions.

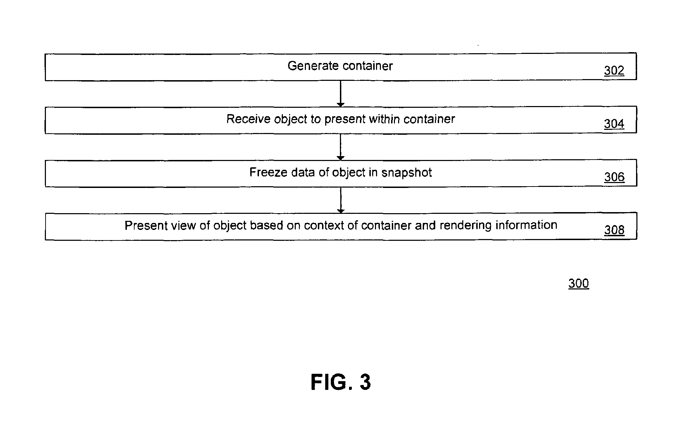

FIG. 3 is a flowchart that details the snapshotting process. At 302, the computer system generates a container that is configured to present one or more of a plurality of objects. For example, the computer system generates the container 102 (see FIG. 1) that is configured to present objects such as the task object 130. As another example, the computer system generates a container that models the context 204 (see FIG. 2) that is configured to present objects such as the content item 208 task object.

At 304, an object is received to present within the container. For example, a user interacts with the user interface of the computer system to indicate a system object (e.g., the supplier 202 in FIG. 2) to present within the context 204 modeled by the container.

At 306, the data of the object is frozen as a snapshot. For example, regarding the analytical chart that documents the low performance (discussed above), the data of the system object is frozen when the object is added to the context. The frozen data may be stored with the other data within the context. The frozen data may be linked to the underlying system object, allowing the user to edit the data (without changing the frozen data).

At 308, the computer system presents a view of the object within the container based on a context of the container and rendering information retrieved by the container via a rendering service of the object. The rendering information defines at least in part how the object is to be presented within a particular context of the container amongst a plurality of contexts within which the object can be rendered. The view corresponds to the snapshot of the object with the data having been frozen.

As discussed above, once the frozen data has been stored with the snapshot of the object, the user may edit the underlying data without changing the snapshot. Then when the user views the object subsequently (e.g., the system presents a subsequent view of the object), the view corresponds to the snapshot with the frozen data instead of the edited data. The view may differ from the earlier view of the object if the context of the container has changed.

2.2 Elasticity of Containers

The container is the technical object to model task context. When users move task objects from one container to the next they create implicitly or explicitly task contexts that are represented as the combination of the container semantics and embedded task objects.

While task models play an important role in requirements engineering and inform the design directions, they get usually lost when creating the actual system. What typically materializes within the application is only a set of core data objects, some application logic, and many static screens that have been designed to match the mental model of a prospective user. This leaves the task model to be an implicit property of the application which cannot be leveraged as an explicit model at runtime.

To compensate for this loss of explicit task semantics in traditional application design, the TUX system allows the container to represent semantics in a very elastic way to facilitate the creation of a proper task context at runtime under the direction of the user. The TUX system implements the elastic semantics of containers in three ways: elastic purpose, elastic collaboration, and elastic practices.

2.2.1 Elastic Purpose

A system is elastic if the context of use is underspecified. The less the context is defined, the more the user has freedom in projecting a specific purpose into the software application. Such designs are most appropriate for generic tools that should not be constrained by any vertical application domain. For example, the entire Microsoft Office Suite™ is designed on the basis of this principle. With Microsoft Excel™ for example, the user can do complex forecasting, creating shopping lists, or using it as a currency converter. The underspecification of design is one of the secret sources of achieving mass adoption. Many Web 2.0 services are designed along such principles. They are designed for very abstract needs, but agnostic to any specific content; the design has to be open for interpretation to allow appropriation to specific situations and usages. Only by filling content in, the user is incrementally developing a purposed environment.

There is obviously a tradeoff between underspecification and affordance. If there is no specific purpose communicated by the design, the generic function as such must be compelling enough. For example, Wikis are popular because of the convenience to author and publish self-generated content. But users are adopting this technology for various purposes spanning from intranet publishing to project coordination.

While often the transition from unspecific to specific purpose is simply done by adding content, in other cases the transition is achieved by adding tools to an existing container to extend its purpose (e.g., SAP StreamWork™). For example, in the large display scenario the adding of the org-chart tool to the container turned the entire display into an org-chart planning environment, as discussed above with reference to FIG. 1 (note the embedded tool 120).

2.2.2 Elastic Collaboration

Today, collaboration services are specialized on one specific use case or technical service such as communication, online sharing, or team coordination which forces users to make a-priori decisions about appropriate technology first. Such strict boundaries often force users to re-establish a task context within a collaboration environment just to be able to share it with others.

The problem with such rigid design solutions is that collaboration is not a predictable process step but often evolves over time while working on a task. This problem is also surfaced when constructing user stories as part of the requirements definition: "... and now John is calling Mary to discuss the reliability of supplier XYZ. They decide to create a collaboration space to share the latest key performance indicators and invite other stakeholders". While such stories may point to the general need of supporting break-outs into collaborative mode, they are by no means a mandatory task flow. With the exception of policy-motivated approvals and collaboration, the need for collaboration evolves primarily out of the situation and cannot be defined a-priori at design time.

With TUX, users are able to push content at runtime from a non-collaborative environment as task objects into a collaboration space, or the system itself at runtime transforms a personal context into a shared context, without the need to re-instantiate the content. The collaboration service itself can also be considered as an elastic container which may transition from ephemeral chat to a more persistent activity stream at runtime. Often the need to collaborate originates from conversations or emails which then cause the user to create a dedicated new task context.

2.2.3 Elastic Practices

Task flows in reality are not always following the typical task life cycle, but also alternate between non-routine and routine situations. Depending on the familiarity and complexity of a particular task, the task context is more or less well-defined and user will choose different strategies to cope with it. In a non-routine case the system will offer rather generic functions which enable the user to define their intents and action plan in the course of interacting with the system. In a rather well-defined task context there will be a set of exclusive functions which represent common practices or are reflecting user preferences.

As those needs are situational by nature and cannot be pre-modeled in terms of a workflow or standard operational procedures, the elasticity of the system environment is an important design quality for these one-time processes. To support this situational task complexity, the TUX system environment supports the user in switching between different levels of ad-hoc problem solving, for example identifying suitable approaches to tackle a difficult problem vs. accomplishing a well-defined task within the same environment.

This flexibility cannot be achieved with packaged design that offers a number of predefined paths and break-out points to follow some pre-thought work flows. Containers need not only be flexible in representing task-related content, but in modeling constraints and practices that may be leveraged as procedural guidance. By taking advantage of this transformative quality the user can create new task contexts that evolve from unspecified to specified situations.

One way that the TUX system implements the elastic practices is by providing a variety of task flow segments that the user may select and drag into a container. Each of the task flow segments may be directed to a specific task flow (or portion of a task flow), may accept inputs from the container, and may generate outputs into the container. The inputs may come from the objects in the container or from the context of the container. The outputs may be used by other objects, by embedded tools (e.g., the embedded tool 120 of FIG. 1), or by other task flow segments.

For example, a task flow segment may be used to implement the final approval functionality described above with reference to FIG. 2. Specifically, once the preferred supplier has been selected (in the negotiate contract context 224), the user may drag in an approval task flow segment from the task segment repository, as appropriate for the task of approving a supplier. The approval task segment takes as input the system object (e.g., the supplier 202) corresponding to the preferred supplier, and, in accordance with the task flow defined by the task segment, generates as outputs email messages to the managers associated with that system object. The approval task segment may also include a task flow for receiving responses to those emails from the managers, and may adjust the context of the container according to the responses (e.g., an "approved" context if the preferred supplier has been approved by the managers, or a "start over" context if the preferred supplier has been rejected).

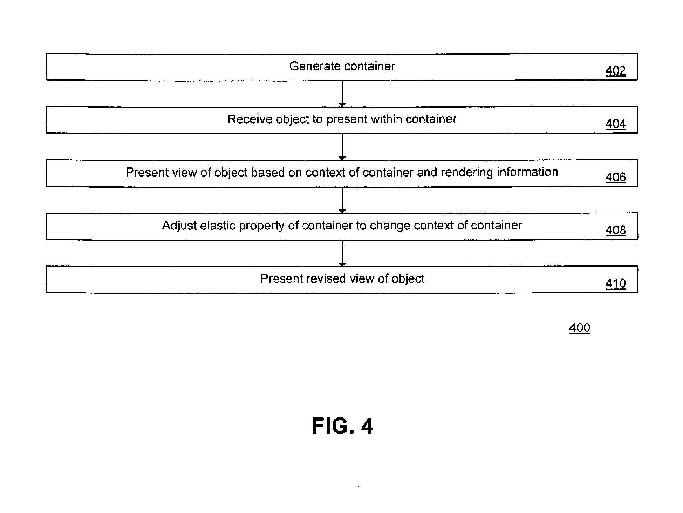

FIG. 4 is a flowchart that details the process relating to the elasticity of containers. At 402, the computer system generates a container that is configured to present one or more of a plurality of task objects. For example, the computer system generates the container 102 (see FIG. 1) that is configured to present task objects such as the task object 130. As another example, the computer system generates a container that models the context 204 (see FIG. 2) that is configured to present objects such as the content item 208 task object.

At 404, a task object is received to present within the container. For example, a user interacts with the user interface of the computer system to indicate a system object (e.g., the supplier 202 in FIG. 2) to present as a task object within the context 204 modeled by the container.

At 406, the computer system presents a view of the task object within the container based on a context of the container and rendering information retrieved by the container via a rendering service of the object. The rendering information defines at least in part how the task object is to be presented within a particular context of the container amongst a plurality of contexts within which the task object can be rendered.

At 408, an elastic property of the container is adjusted to change the context of the container. The elastic property is one of an elastic purpose, and elastic collaboration, and an elastic practice. For example, adding the org-chart tool 120 (see FIG. 1) changes the context of the container into an org-chart planning environment.

At 410, a revised view of the task object is presented according to the elastic property of the container having been adjusted and the context having been changed. For example, after the org-chart tool 120 (see FIG. 1) has been added to the container, the views of the task objects are revised to present them in the context of the org-chart planning environment.

Besides changing the view of the task object, adjusting the elastic property may also change the behavior of the task object. For example, prior to the org-chart tool being added, the behavior of the task object is to be dragged around to any point within the container; after the org-chart tool has been added, the behavior of the task object is to move among nodes in the organizational chart hierarchy.

3. Conclusions

TUX builds on concepts known from direct manipulation, design for appropriation, and Meta Design by implementing a fluid navigation between different task contexts via direct manipulation and contextual transformation of task objects. The TUX system combines this basic design rationale with an elastic container model that explicitly represents task semantics and can impose new usage semantics on its content. The combination of elastic object and context semantics results not only in an unprecedented natural and fluid user experience, but also establishes a new design rationale for building modem interactive systems that form a symbiosis with users' activities.

The concept of elasticity allows system designers to articulate principles how system environments can transform themselves to match the user's intention. Looking at activity theory and action planning, many of those intensions are known and can be used for system design, but they are unpredictable with respect to the order, relevance, or concrete materialization within one particular situation. The TUX system, which has the continuity of dealing with content paired with the flexibility of shaping task contexts, results in an unprecedented symbiosis between system and users.

TUX not only supports the flow from one task context to the next, but also connects platform stacks with application layers.

TUX also helps to bridge the chasm between operating system level and application. An integrated work environment for knowledge workers requires more than generic file-storage systems and tool palettes that launch packaged applications. The seamless transition between searching, collecting, using, and transforming content is what characterizes knowledge work. This intermediate layer, otherwise missing today, is filled with the TUX framework.

Platforms tend to offer flexible infrastructure services and common user interfaces that are rather agnostic to any specific content and limited to very generic activities. In contrast, purposed applications combine content and application logic according to some envisioned task context but make their content not consumable outside of their packaged user interfaces. The elasticity of TUX can help to establish a continuum between generic and purposed application contexts to fill the gap between generic operating system and packaged applications by introducing enablements for seamless transitions from context-agnostic environments to task-specific containers.

Activity spaces could emerge out of the operating system level by manipulating content and activating loosely coupled capabilities. This intermediate layer works best for horizontal use cases that reflect typical task needs of knowledge workers and in collaboration scenarios. As more domain specificity comes into play, designing for packaged tools and domain-specific integrated development environments needs not to be affected. But the more designers strive towards immersive user interfaces, the more appealing TUX principles should become and provide a guiding design orientation.

The rationale of designing packaged applications will not scale for generative user interfaces where the user is using the system as part of his or her natural environment and incrementally shape a user interface as needed for a task. Think about the large display example where users incrementally shared and created content, pulled together information, but also defined follow up actions. Such environments dynamically follow the current user activities by not only persisting content, but also by adjusting object postures according to the current task context which is incrementally established.

The TUX system enables new design practices to emerge that take a new approach on interaction design to augment knowledge work by allowing users to interact with content in an ostensive manner. With the user actively creating task contexts and the user interface not being restricted to a-priori packaged applications, the difference between use time and design time vanishes. Content can be composed and shaped in an ad-hoc manner. This architecture explicitly acknowledges the existence of control and expertise outside of the system, but at the same time TUX enables the system to evolve at runtime in symbiosis with its use.

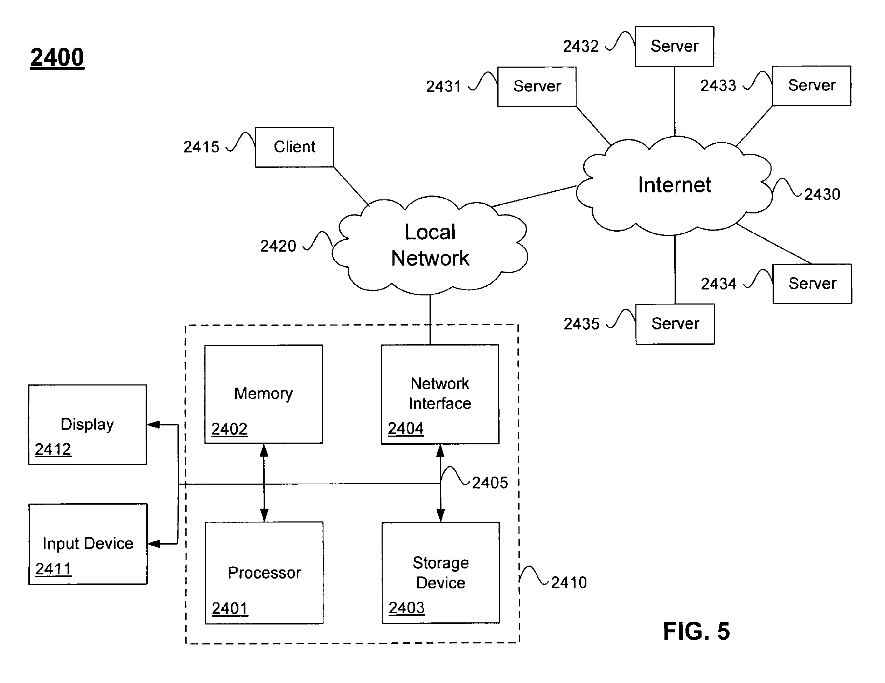

FIG. 5 is a block diagram of an example computer system and network 2400 for implementing embodiments of the present disclosure. Computer system 2410 includes a bus 2405 or other communication mechanism for communicating information, and a processor 2401 coupled with bus 2405 for processing information. Computer system 2410 also includes a memory 2402 coupled to bus 2405 for storing information and instructions to be executed by processor 2401, including information and instructions for performing the techniques described above. This memory may also be used for storing temporary variables or other intermediate information during execution of instructions to be executed by processor 2401. Possible implementations of this memory may be, but are not limited to, random access memory (RAM), read only memory (ROM) (when not storing temporary variables or other intermediate information), or both. A storage device 2403 is also provided for storing information and instructions. Common forms of storage devices include, for example, a hard drive, a magnetic disk, an optical disk, a CD-ROM, a DVD, a flash memory, a USB memory card, a solid state drive, or any other medium from which a computer can read. Storage device 2403 may store source code, binary code, or software files for performing the techniques or embodying the constructs above, for example.

Computer system 2410 may be coupled via bus 2405 to a display 2412, such as a cathode ray tube (CRT) or liquid crystal display (LCD), for displaying information to a computer user. An input device 2411 such as a keyboard and/or mouse is coupled to bus 2405 for communicating information and command selections from the user to processor 2401. The combination of these components allows the user to communicate with the system. In some systems, bus 2405 may be divided into multiple specialized buses.

Computer system 2410 also includes a network interface 2404 coupled with bus 2405. Network interface 2404 may provide two-way data communication between computer system 2410 and the local network 2420. The network interface 2404 may be a digital subscriber line (DSL) or a modem to provide data communication connection over a telephone line, for example. Another example of the network interface is a local area network (LAN) card to provide a data communication connection to a compatible LAN. Wireless links is also another example. In any such implementation, network interface 2404 sends and receives electrical, electromagnetic, or optical signals that carry digital data streams representing various types of information.

Computer system 2410 can send and receive information, including messages or other interface actions, through the network interface 2404 to an Intranet or the Internet 2430. In the Internet example, software components or services may reside on multiple different computer systems 2410 or servers 2431, 2432, 2433, 2434 and 2435 across the network. A server 2431 may transmit actions or messages from one component, through Internet 2430, local network 2420, and network interface 2404 to a component on computer system 2410.

The computer system and network 2400 may be configured in a client server manner. For example, the computer system 2410 may implement a server. The client 2415 may include components similar to those of the computer system 2410.

More specifically, as described above, the server 2431 may store the system objects (see 110 in FIG. 1 and 202 in FIG. 2), e.g., in one or more database tables. The server 2410 may implement the TUX system itself (e.g., a system that implements the processes of FIG. 3 and FIG. 4) or components thereof. The client 2415 may implement a user interface client for a user to interact with the server 2410, for example, to display and manipulate the containers and contexts shown in FIG. 1 and FIG. 2.

The above description illustrates various embodiments along with examples of how aspects of the present invention may be implemented. The above examples and embodiments should not be deemed to be the only embodiments, and are presented to illustrate the flexibility and advantages of the present disclosure as defined by the following claims. Based on the above disclosure and the following claims, other arrangements, embodiments, implementations and equivalents will be evident to those skilled in the art and may be employed without departing from the spirit and scope of the disclosure as defined by the claims.

## Claims

1. A computer-implemented method of implementing a user experience, comprising:
generating, by a computer system, a container that is configured to present one or more of a plurality of task objects;
receiving a task object to present within the container;
presenting, by the computer system, a view of the task object within the container based on a context of the container and rendering information retrieved by the container via a rendering service of the task object, the rendering information defining at least in part how the task object is to be presented within a particular context of the container amongst a plurality of contexts within which the task object can be rendered;
adjusting an elastic property of the container to change the context of the container, wherein the elastic property is one of an elastic purpose, and elastic collaboration, and an elastic practice; and
presenting a revised view of the task object according to the elastic property of the container having been adjusted and the context having been changed.

2. The computer-implemented method of claim 1, wherein adjusting the elastic property of the container transitions the container from an unspecific purpose to a specific purpose and/or
wherein the elastic purpose is implemented by adding a tool to the container.

3. The computer-implemented method of claim 1 or 2, wherein the elastic purpose is implemented by adding an org-chart tool to the container; and/or
wherein the elastic collaboration adjusts the context of the container from a personal context to a shared context.

4. The computer-implemented method of any one of claims 1 to 3, wherein the elastic collaboration adjusts the context of the container from a personal context to a shared context at runtime; and/or
wherein the elastic collaboration adjusts the context of the container from a personal context to a shared context at runtime without re-instantiating the context; and/or
wherein the elastic practice is implemented by adding a task flow segment to the container.

5. The computer-implemented method of any one of claims 1 to 4, wherein the elastic practice is implemented by adding a task flow segment to the container, wherein the task flow segment includes a task flow, is configured to accept an input from the container, is configured to process the input according to the task flow, and is configured to generate an output to the container according to the input having been processed according to the task flow.

6. The computer-implemented method of any one of claims 1 to 5, wherein the elastic practice is implemented by adding a task flow segment to the container, wherein the task flow segment includes a task flow, is configured to accept an input from the container, is configured to process the input according to the task flow, and is configured to generate an output to the container according to the input having been processed according to the task flow, and wherein the output adjusts the context of the container.

7. The computer-implemented method of any one of claims 1 to 6, wherein the task object has a behavior, further comprising:
adjusting the behavior of the task object to a revised behavior, according to the elastic property of the container having been adjusted and the context having been changed.

8. The computer-implemented method of any one of claims 1 to 7, further comprising:
storing a system object, wherein the task object is a proxy to the system object.

9. The computer-implemented method of any one of claims 1 to 8, wherein the context imposes a situational semantic on a system object by casting the system object as the task object; and/or
wherein the context is a pre-defined context and acts as a purposed tool with a pre-defined task meaning.

10. The computer-implemented method of any one of claims 1 to 9, further comprising:
converting the context into a second task object within a second context.

11. A system for implementing a user experience, comprising:
a generating component that is configured to control a computer system to generate a container that presents one or more of a plurality of task objects;
a receiving component that is configured to receive a task object to present within the container;
a presenting component that is configured to control the computer system to present a view of the task object within the container based on a context of the container and rendering information retrieved by the container via a rendering service of the task object, the rendering information defining at least in part how the task object is to be presented within a particular context of the container amongst a plurality of contexts within which the task object can be rendered; and
an adjusting component that is configured to adjust an elastic property of the container to change the context of the container, wherein the elastic property is one of an elastic purpose, and elastic collaboration, and an elastic practice,
wherein the presenting component is further configured to present a revised view of the task object according to the elastic property of the container having been adjusted and the context having been changed.

12. A computer-implemented method of implementing a user experience, comprising:
generating, by a computer system, a container that is configured to present one or more of a plurality of task objects;
receiving a task object to present within the container;
freezing the data of the object as a snapshot; and
presenting, by the computer system, a view of the task object within the container based on a context of the container and rendering information retrieved by the container via a rendering service of the task object, the rendering information defining at least in part how the task object is to be presented within a particular context of the container amongst a plurality of contexts within which the task object can be rendered, wherein the view corresponds to the snapshot of the task object with the data having been frozen.

13. The computer-implemented method of claim 12, wherein the data of the task object is frozen as the snapshot when the task object is received to present within the container.

14. The computer-implemented method of claim 12 or 13, further comprising:
storing the snapshot of the task object with the data having been frozen;
updating the data of the task object; and
presenting a second view of the task object, wherein the second view corresponds to the snapshot of the task object with the data having been frozen instead of the data having been updated.

15. The computer-implemented method of any one of claims 12 to 14,
wherein the context corresponds to a first context, further comprising:
storing the snapshot of the task object with the data having been frozen;
updating the data of the task object;
changing the first context of the container to a second context that differs from the first context; and
presenting a second view of the task object based on the second context, wherein the second view corresponds to the snapshot of the task object with the data having been frozen instead of the data having been updated.
